# EUROPEAN PATENT SPECIFICATION

(11) **EP 1 071 193 B1**
(45) Date of publication and mention of the grant of the patent: **19.03.2003**
(21) Application number: 00115457.4
(22) Date of filing: 18.07.2000
(51) Int. Cl.: H02K 21/04

(54) **Rotary electric machine**
Rotierende elektrische Maschine
Machine électrique tournante

(30) Priority: 19.07.1999 JP 20439699; 07.06.2000 JP 2000170486
(43) Date of publication of application: 24.01.2001
(73) Proprietor: Mitsuba Corporation, Kiryu-shi, Gunma-ken (JP)
(72) Inventor: Uchiyama, Hidekazu, Kiryu-shi, Gunma (JP); Nozue, Yutaka, Kiryu-shi, Gunma (JP); Oikawa, Makoto, Kiryu-shi, Gunma (JP)
(74) Representative: Prato, Roberto

(56) References cited:
- US-A- 5 767 601
- PATENT ABSTRACTS OF JAPAN vol. 1995, no. 06, 31 July 1995 (1995-07-31) & JP 07 059314 A (MITSUBA ELECTRIC MFG CO LTD), 3 March 1995 (1995-03-03)
- PATENT ABSTRACTS OF JAPAN vol. 005, no. 007 (E-041), 17 January 1981 (1981-01-17) & JP 55 136858 A (OMRON TATEISI ELECTRONICS CO), 25 October 1980 (1980-10-25)

## Description

### BACKGROUND OF THE INVENTION

The present invention relates to an outer-rotor type of motor or generator, a rotor of which rotates outside a stator. More particularly, the invention relates to a technique that is useful when applied to the motor or generator in which permanent magnets and field windings are used as a field-magnet means.

Magneto-generators have been proposed as rotary electric machines of so-called hybrid field-magnet structure that comprises permanent magnets and field windings. Such a magneto-generator is disclosed in, for example, Japanese Patent Application Laid-Open No. 7-59314. FIG. 7 is an explanatory view showing an example of the magneto-generator with such a hybrid field-magnet structure.

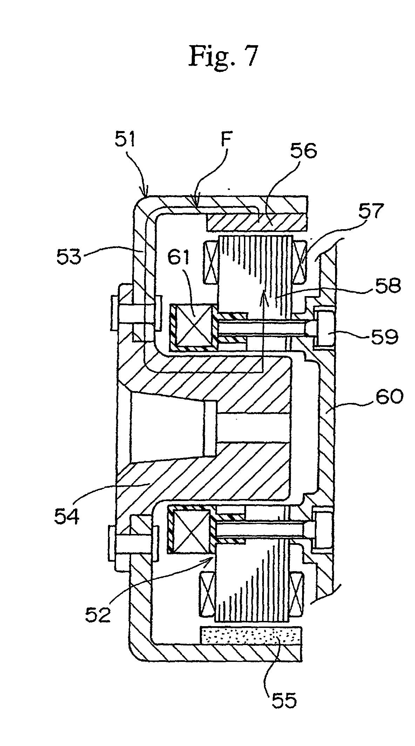

The magneto-generator shown in FIG. 7 has a rotor 51 and a stator 52. The rotor 51 is located outside the stator 52, surrounding the stator 52. The rotor 51 comprises a yoke 53 and a boss-rotor 54. The yoke 53 is made of magnetic material such as iron or the like. The boss-rotor 54 is provided concentrically to the yoke 53. On the inner circumferential surface of the yoke 53, a plurality of permanent magnets 55 and a plurality of control magnetic poles 56 are alternately arranged. The control magnetic poles are made of magnetic material such as iron or the like.

The stator 52 has a stator core 58, around which an armature coil 57 is wound. One end of the stator core 58 is fastened to an end bracket 60 by means of bolts 59. A field coil 61 for controlling field magnetic flux is secured to the other end of the stator core 58 by means of bolts 59. Magnetic flux F of the field coil 61 forms a closed magnetic circuit, extending from the boss rotor 54 through the yoke 53, the control magnetic pole 56, and the stator core 58 to the boss rotor 54. The direction of the magnetic flux F is reversed as corresponding to the flow direction of electric current in the field coil 61. When the rotor 51 rotates, the armature coil 57 generates electromotive force. Amounts of power generation generated from the electromotive force can be adjusted by controlling the flow direction and amount of electric current in the field coil 61, thereby changing the effective magnetic flux.

In order to increase the amount of magnetic flux generated by the field coil 61, it is necessary to reduce magnetic resistance in the above-mentioned magnetic circuit. The magnetic resistance is inversely proportional to the cross-sectional area of the magnetic circuit. It is therefore desired that the magnetic circuit have a large cross-sectional area. Consequently, the boss rotor 54 has a large diameter and the yoke 53 is made thick in the rotary electric machine illustrated in FIG. 7.

If the boss rotor 54 is made larger and the yoke 53 is made thicker, however, the rotor 51 will become heavier in weight and have larger inertial mass (i.e., inertia). That is to say, if the rotary electric machine is designed on the basis of a magnetic condition thereof prior to the other conditions, there is a drawback that the rotor 51 is heavier in weight. In view of this, the hybrid field-magnet structure described above cannot be applied to generators and motors which need to have small inertial mass as is desired. It is therefore demanded that the hybrid field-magnet structure be improved.

### SUMMARY OF THE INVENTION

An object of the present invention is to provide a rotary electric machine whose rotor is reduced in weight and inertial mass.

A rotary electric machine according to the present invention comprises: a stator having an armature coil and a core member around which the armature coil is wound; a rotor having a first yoke made of magnetic material, a plurality of permanent magnets magnetized in the same polarity, and a plurality of control magnetic poles made of magnetic material, the first yoke being formed like a bottomed hollow cylinder and rotatably provided outside the stator, the permanent magnets being spaced on an inner surface of a cylindrical section of the first yoke in a circumferential direction of the first yoke, the control magnetic poles being arranged between the permanent magnets; a second yoke made of magnetic material, magnetically connected to the core member so as to be positioned concentrically to the rotor in an opposite side of the first yoke, and provided so as to cover an outer circumferential surface of the cylindrical section of the first yoke from an opposite side of the first yoke through a gap; and a field coil provided between the core member and the second yoke, thereby forming a closed magnetic circuit that extends from the second yoke through the cylindrical section of the first yoke, control magnetic poles, and the core member to the second yoke.

In the rotary electric machine, the second yoke can serve to form a closed magnetic circuit, using the field coil as the magnetism source. Thus, the first yoke and the boss rotor need not serve to form the magnetic circuit at all. The first yoke can be made thin, and the boss rotor can be made small. This makes it possible to reduce the weight and inertial mass of the rotor. Therefore, the rotor can have a weight and inertial mass that are equal to those of conventional rotor which is not of hybrid field-magnet structure. Hence, the hybrid field-magnet structure can be applied to generators, despite the restriction concerning the inertial mass. Further, the first yoke and the boss rotor can be composed of the components of a conventional generator, which has no hybrid field-magnet structure. The conventional components and the conventional manufacturing facility can be used, without being modified, to manufacture the generator. The manufacturing cost of the generator can therefore be reduced. Moreover, since the first yoke and the boss rotor can be made small, the rotary electric machine can be made thin as a whole.

In the rotary electric machine, the second yoke may have a boss section connected to an inner circumferential surface of the core member or to a center part thereof, and the field coil may be wound, surrounding the boss section. The rotary electric machine may further comprises field coil control means for controlling at least one of direction and amount in which an electric current is supplied to the field coil, thereby to change a magnetic flux generated by the field coil.

Moreover, in the rotary electric machine, a gap may be provided between the first yoke and the boss section of the second yoke, magnetically isolating the first yoke and the boss section from each other. In this case, the gap may be one provided between the boss rotor protruding from the center part of the first yoke, shaped like a hollow cylinder and extending along the axis of rotation of the first yoke and the boss section of the second yoke, thus magnetically connecting the boss rotor and the boss section. Further, a gap may be provided also between the distal end of the boss section of the second yoke and the bottom section of the first yoke, thus magnetically connecting the boss section and the bottom section. These gaps prevent the magnetic flux from leaking from the field coil to the boss rotor or yokes of the rotor.

The second yoke may serve as the bracket of the rotary electric machine. If so, the second yoke can constitute a part of the housing of the rotary electric machine, simplifying the structure of the rotary electric machine.

The rotary electric machine may be a brush-less motor. In this case, the machine may further comprises rotor-position detecting means for detecting a position of the rotor and a current-supply control means for supplying a current to the armature coil in accordance with a result of detection achieved by the rotor-position detecting means, thereby to generate a magnetic field between the armature coil and the rotor. The field coil control means may change the magnetic flux generated by the field coil, thereby to control an effective magnetic flux acting between the rotor and the stator and change operating characteristics of the motor.

The rotary electric machine may a generator. In this case, the field coil control means may change the magnetic flux generated by the field coil, thereby to control effective magnetic flux acting between the rotor and the stator and change operating characteristics of the generator.

Another rotary electric machine according to the invention comprises: a stator having an armature coil and a core member around which the armature coil is wound; a rotor having a boss rotor magnetically connected to a center part of the core member, a first yoke made of magnetic material, a plurality of permanent magnets magnetized in the same polarity, and a plurality of control magnetic poles made of magnetic material, the boss rotor being formed like a bottomed hollow cylinder and rotatably provided outside the stator, the permanent magnets magnetized being spaced on an inner surface of a circumferential section of the first yoke in a circumferential direction of the first yoke, the control magnetic poles being arranged between the permanent magnets; a second yoke made of magnetic material, magnetically connected to the core member so as to be positioned concentrically to the rotor and to face on both a bottom of the first yoke and an outer surface of the boss rotor; and a field coil provided between the second yoke and the armature coil, the field coil having a closed magnetic circuit extending from the core member through the boss rotor and the first yoke to the core member, and a sub-magnetic circuit extending from the core member though the second yoke to the first yoke. Hence, when a current flows the field coil arranged between the second yoke and the armature coil, a closed magnetic circuit is formed which extends through the core member, boss rotor, first yoke and core member, and a sub-magnetic circuit is formed which extends through the core member, second yoke and first yoke. Thus, the magnetic flux generated in the sub-magnetic circuit can compensate for the decrease in the magnetic flux in the closed magnetic circuit.

Further, a planer gap may be provided between the bottom of the first yoke and the second yoke facing the bottom of the first yoke. By virtue of the planer gap, the magnetic flux generated in the sub-magnetic circuit can be smoothly transmitted to the bottom section of the closed magnetic circuit.

Moreover, the second yoke may have an extended section formed integral with a free end and opposing the inner surface of the first yoke, which is a hollow cylinder. Thus, when a current flows in the field coil, the field coil forms a sub-magnetic circuit that extends through the core member, second yoke and extended section of the second yoke. Hence, that part of the first yoke that overlaps the extended section of the second yoke can have a small wall thickness.

Still further, the second yoke may have a laminated section that is located near the core member. This renders it easy to make the through holes by means of a press, which in turn makes it easy to assemble the generator.

### BRIEF DESCRIPTION OF THE DRAWINGS

FIG. 1 is a cross sectional view showing structure of a generator which is the first embodiment of the present invention, and shows an example applied to the generator which is one type of rotary electric machine of the present invention.
FIG. 2 is a cross sectional view showing structure of a brush-less motor which is the second embodiment of the present invention, and shows an example applied to the brush-less motor which is one of rotary electric machines of the present invention.
FIG. 3 is a cross sectional view showing structure of a brush-less motor which is the third embodiment of the present invention.
FIG. 4 is a cross sectional view showing structure of a generator which is the forth embodiment of the present invention, and shows an example applied to the generator which is one type of rotary electric machine of the present invention.
FIG. 5 is a magnified view of the lower half of the generator that is shown in FIG. 4.
FIG. 6 is a sectional view of a generator that is a modification of the fourth embodiment.
FIG. 7 is a sectional view of a conventional rotary electric machine that has hybrid field-magnet structure.

### DESCRIPTION OF THE PREFERRED EMBODIMENTS

Embodiments of the present invention will be described in detail, with reference to the accompanying drawings.

### (First Embodiment)

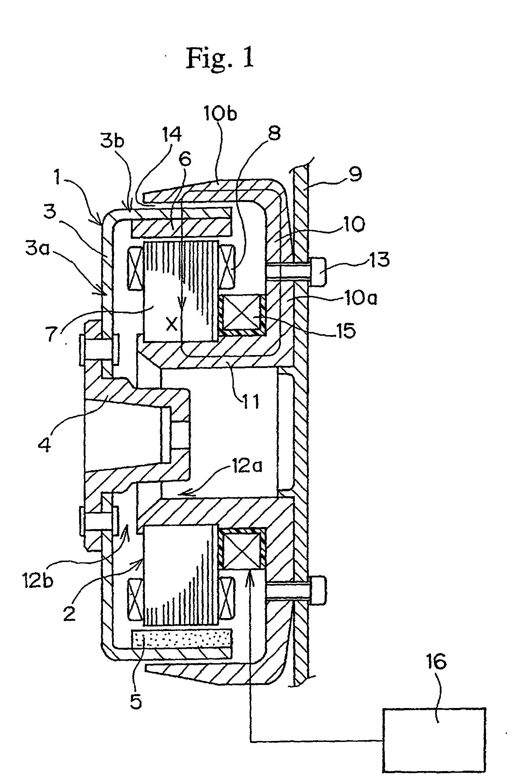

FIG. 1 is a sectional view showing structure of a generator which is the first embodiment of the present invention and shows an example applied to the generator which is one type of rotary electric machine of the present invention.

The generator shown in FIG. 1 comprises two major components, i.e., a rotor 1 and a stator 2. The rotor 1 functions as field magneton, and the stator 2 functions as armature. Like the generator shown in FIG. 7, the generator has so-called hybrid field-magnet structure that comprises a field coil 15 and control magnetic poles 6. The generator is designed, for example, for use in two-wheeled vehicles or in a generating system using a general-purpose engine. The rotor 1 of the generator is coupled with the crankshaft or the like of the engine and the stator 2 of the generator is secured to the bracket of the engine or the like.

The rotor 1 comprises a first yoke 3 and a boss rotor 4. The first yoke 3 is a short, bottomed hollow cylinder made of magnetic material such as iron or the like. The boss rotor 4 is formed like a hollow cylinder. The hollow cylinder is secured to the bottom 3a of the first yoke 3, is positioned concentrically to the bottom 3a and extends along its axis of rotation. The boss rotor 4 is taper-connected to the crankshaft or the like. The rotor 1, therefore, rotates as corresponding to rotation of the crankshaft or the like.

A plurality of magnets (permanent magnets) 5 and a plurality of control magnetic poles 6 are alternately arranged in the circumferential direction on the inner circumferential surface of the cylindrical section 3b of the first yoke 3. The magnets 5 constitute field magneton of the rotor 1. The control magnetic poles 6 are made of magnetic material. That is, this generator has hybrid field-magnet structure, too, which provides control magnetic poles 6 with field magneton.

Next, the stator 2 comprises a stator core 7, an armature coil 8, and a second yoke 10. The stator core 7 is composed of a plurality of thin plates stacked. Each of thin pates is made of magnetic material such as iron. The armature coil 8 is wound around the stator core 7. The second yoke 10 is fastened to the end bracket 9 of the engine or the like. The second yoke 10 is a bottomed hollow cylinder that is positioned concentrically to the rotor 1 and that has a boss section 11 integrally protruded from the center part. The boss section 11 extends along the axis of rotation of the rotor 1 and is coupled to the inner circumferential surface of the stator core 7. The boss section 11 and the stator core 7 are therefore connected magnetically.

The tip end portion of the boss rotor 4 is accommodated in the inner circumferential side of the boss section 11. A gap 12a is provided between the inner circumferential surface of the boss section 11 and the outer circumferential surface of the boss rotor 4. The gap magnetically insulates the boss rotor 4 and the boss section 11 from each other. A gap 12b is provided, also between the tip end of the boss section 11 and the bottom 3a of the first yoke 3. This gap 12b magnetically insulates the first yoke 3 and the boss section 11 from each other. Hence, the magnetic flux generated from the field coil 15 is prevented from reaching the boss rotor 4 or the bottom 3a of the first yoke 3.

The bottom 10a of the second yoke 10 is fastened to the end bracket 9 by means of bolts 13. The cylindrical section 10b of the second yoke 10 surrounds an outer circumferential surface of the cylindrical section 3b of the first yoke 3 from the opposite side of the first yoke 3, that is, the right side of FIG. 1. Then an air gap 14 is provided between the outer circumferential surface of the cylindrical section 3b and the inner circumferential surface of the cylindrical section 10b. Thus, the rotor 1 is arranged in a state that the cylindrical section 3b of the first yoke 3, magnets 5 and control magnetic poles 6 are accommodated between the stator core 7 and the cylindrical section 10b of the second yoke 10. That is, the rotor 1 has such a structure as to be driven by the crankshaft or the like in a state that the boss rotor 4 is inserted in the center part of the boss section 11 of the second yoke 10, and to allow the magnets 5 and control magnetic poles 6, which are arranged on the inner circumferential surface of the first yoke 3, to rotate around the stator 2 after driving the rotor 1.

The field coil 15 is located between the stator core 7 and the bottom 10a of the second yoke 10 in the opposite side of the first yoke 3 relative to the stator core 7. The field coil 15 is wound so as to surround the boss section 11. By a field coil control means 16 controls, the amount and direction of current flowed in the field coil 15 are controlled as desired. The above-mentioned generator differs from the generator shown in FIG. 7 in location, so that the field coil 15 does not need to pass through the stator core 7 for wiring and this results in simplifying a wiring structure as compared with the conventional rotary electric machine.

When an electric current flows in the field coil 15, a closed magnetic circuit X is formed. The closed magnetic circuit extends from the boss section 11 of the second yoke 10 through the bottom 10a, the cylindrical section 10b, air gap 14, the cylindrical section 3b of the first yoke 3, the control magnetic poles 6, and the stator core 7 to the boss section 11. In this case, the magnetic flux generated by the field coil 15 concentrates on the control magnetic poles 6. This is because the control magnetic poles 6 have lower magnetic resistance than the magnets 5 with low magnetic permeability. Therefore, when an amount and direction of the electric current induced in the field coil 15 is changed, an amount and direction of the magnetic flux generated by the field coil 15 varies and, thereby, a magnetic intensity and direction of the control magnetic poles 6 changes. Accordingly, in the above-mentioned generator, a state of the field magneton is varied by the magnets 5 and the control magnetic poles 6, so that effective magnetic flux amount induced between the rotor 1 and the stator 2 can be controlled as desired.

In the generator according to the invention, the gaps 12a and 12b magnetically insulate the boss rotor 4 from the boss section 11 of the second yoke 10. Therefore, the magnetic flux generated by the field coil 15 is not induced in the bottom 3a of the first yoke 3. That is, while the yoke 53 is included as a part in the closed magnetic circuit as shown in FIG. 7, the second yoke 10 is included as a part in the closed magnetic circuit generated by the field coil 15 in the present invention, so that the second yoke 10 play the same role as the yoke 53. Thus, the bottom 3a of the first yoke 3 and the boss rotor 4 can be released from the role for forming the closed magnetic circuit. Both thickness of the first yoke 3 and size of the boss rotor 4 can be reduced, respectively, as compared with the rotary electric machine of FIG. 7. The rotor 1 can have a weight and inertial mass that are equal or similar to those of a generator that has no hybrid field-magnet structure.

Hence, a generator not engaged for limit of inertia mass or the like can also be applied to the hybrid field-magnet structure. Such a generator allows the field coil 15 and the control magnetic poles 6 to control characteristics thereof. In addition, the generator can be reduced in thickness because the first yoke 3 and the boss rotor 4 can be made small.

Moreover, the first yoke 3 and the boss rotor 4 can be constructed from generally conventional components of the generator without a hybrid field-magnet structure. This is because they are not used as components for forming the magnetic circuit when an electric current is induced in the field coil 15. In other words, the magnets that are arranged on the inner circumferential surface of the first yoke 3 in the conventional machine can be used in combination with the control magnetic poles in the present embodiment. Therefore, it not necessary to design the first yoke 3 and/or the boss rotor 4 in accordance with the particulars of the field coil 15 as in the conventional rotary electric machine shown in FIG. 7. As the conventional components and the conventional manufacturing facility can be used, without being modified, to manufacture the generator, the manufacturing cost of the generator can be reduced.

Next, operation of the generator will be described below. Firstly, when engine or the like (not shown) is started, the rotor 1 coupled with the crankshaft of the engine rotates around the stator 2. As the rotor 1 rotates, the magnetic flux generated from the magnets 5 and control magnetic poles 6 defines rotating magnetic field, thereby causing electromotive force in the armature coil 8 because of extending across the armature coil 8 of the stator 2. The electromotive force is supplied, though a lead line (not shown) connected to the armature coil 8, to a desirable load provided outside the generator.

Characteristics of the generator can be controlled, if necessary, by changing the direction and strength of the electric current induced in the field coil 15. That is, the state and intensity of respective control magnetic poles 6 are changed from a state with pole opposite to that of the magnets 5, to a state with the same pole as that of the magnets 5. Thereby, since the effective intensity magnetic flux amount is varied, amount of the power generation generated therefrom can be adjusted as desired.

In this case, as long as electric current is not induced in the field coil 15, the control magnetic poles 6 remain pole opposite to the magnets 5. And, magnetic poles N and S, which are defined by the magnetic flux generated from only the magnets 5, are alternately arranged on the inner circumferential surface of the rotor 1. Thus, only the magnetic flux of the magnets 5 acts on the armature coil 8. On the other hand, when electric current is induced in the field coil 15 such that the control magnetic poles 6 have pole opposite to that of the magnets 5, magnetic poles N and S, superposed with the magnetic flux generated from the magnets 5 and field coil 15, are alternately arranged on the inner circumferential surface of the rotor 1. The effective magnetic flux that acts on the armature coil 8 is, therefore, intensified, whereby the above-mentioned generator is driven in a state of effective magnetic flux intensified, thereby increasing amount of power generation.

Meanwhile, when the direction of the current induced in the field coil 15 is changed, the direction of the magnetic flux passing through each control magnetic pole 6 is reversed. As indicated above, respective control magnetic poles 6 receive both the magnetic flux generated from the magnets 5 and the magnetic flux generated from the field coil 15. When amount of the magnetic flux from the field coil 15 surpasses amount of the magnetic flux from the magnets 5 in terms of intensity, the magnets 5 and the control magnetic poles 6 have the same pole. When each of the magnets 5 and control magnetic poles 6 becomes a state with the same pole, either magnetic poles N or S with different intensity is arranged on the inner circumferential surface of the rotor 1. Accordingly, this reduces the effective magnetic flux. The above-mentioned generator is driven in a state of effective magnetic flux weakened, thereby decreasing amount of power generation.

### (Second Embodiment)

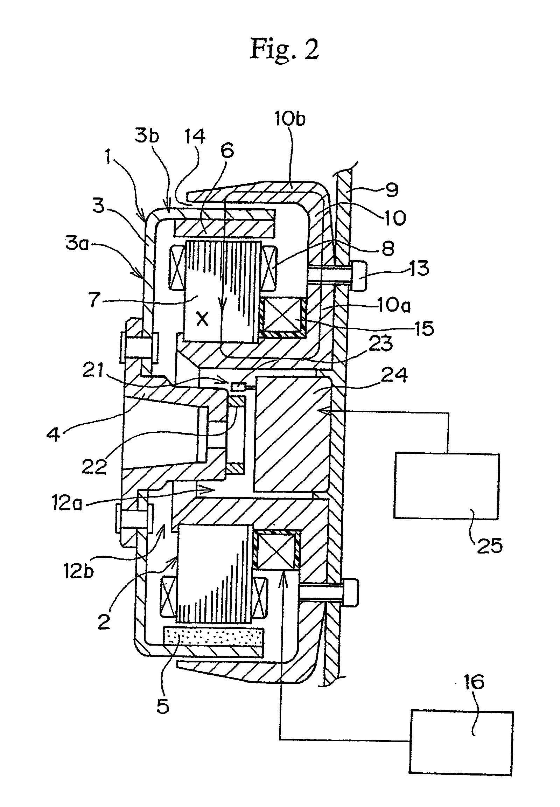

The second embodiment of this invention, which is an electric motor as an example of rotary electric machines of the present invention, will be described. FIG. 2 is the cross sectional view of the motor, or more precisely a brush-less motor (hereinafter called "motor") according to the second embodiment. The components of the motor, which are identical or similar to those of the first embodiment are designated at the same reference numerals and will not be described in detail.

The motor shown in FIG. 2 is a three-phase brush-less motor. The motor has an armature coil 8, which is controlled by a semiconductor switch. The motor incorporates a rotor-position detecting device (i.e., a rotor-position detecting means) 21 that is indispensable to turn on and off the semiconductor switch. The rotor-position detecting device 21 comprises a sensor magnet 22, three Hall ICs 23, and a sensor unit 24. The sensor magnet 22 is secured in a side of the rotor 1, while the Hall IC 23 and the sensor unit 24 are attached to the stator 2.

The sensor magnet 22 is shaped like a ring, composed of segments that are magnetized and arranged at intervals in the circumferential direction. The sensor magnet 22 is fastened to the second yoke 10 of a boss rotor 4 and positioned concentrically to the boss rotor 4. The three Hall ICs 23 are provided on the front of the sensor unit 24 and arranged in a circle. They are spaced apart from one another, thus having a phase difference between them. The second yoke 10 is secured to an end bracket 9, whereby the Hall ICs 23 oppose the sensor magnet 22, spaced from the magnet 22 by a predetermined air gap.

Once the sensor unit 24 and the second yoke 10 are secured to the end bracket 9, it is placed within the boss section 11 of the second yoke 10. A motor controller 25 having a semiconductor switch is connected to the sensor unit 24. The motor controller 25 controls the supply of power to the armature coil 8 in accordance with the results detected by the sensor unit 24, to generate a rotating magnetic field between the rotor 1 and the armature coil 8.

In the motor, a part of the rotor 1 is inserted in the stator 2 and the sensor magnet 22 is mounted on this part, in order to reduce the size of the motor and prevent the influence of the armature coil 8. The Hall ICs 23 are arranged, facing the sensor magnet 22 that is mounted on the rotor 1. The influence of the noise generated by the magnetic fields generated from the magnets 5 on the rotor 1 and by the winding current of the armature coil 8 can therefore be reduced in the course of detecting the position of the rotor 1.

In the brush-less motor of this invention, the bottom 3a of the first yoke 3 and the boss rotor 4 need not serve to form a magnetic circuit as in the first embodiment. The rotor 1 can have as small a weight and an inertial mass as in conventional brush-less motors that have no hybrid field-magnet structure. This makes it possible to improve the response of the motor over that of conventional brush-less motors that have hybrid field-magnet structure. Since the first yoke 3 and the boss rotor 4 are small, the motor can be made thin as a whole. Further, the components of ordinary brush-less motors can be used in the motor. Thus, the conventional manufacturing facility can be used, without being modified, to manufacture the motor. This helps to reduce the manufacturing cost of the motor.

The operating characteristics of the brush-less motor, too, can be controlled by changing the direction and amount in which the current flows in the field coil 15. More precisely, the characteristics of the motor can continuously changed from "low-speed, high-torque mode" to "high-speed, low-torque mode," or vice versa. When a current flows in the field coil 15, rendering the control magnetic poles 6 pole opposite to that of the magnets 5, the effective flux acting on the armature coil 8 increases as has been described. In this case, the torque of the armature coil 8 increases. Thus, the motor can be operated to increase the armature torque to a desired value, when a large torque is required as at the start of operation.

When the direction of electric current induced in the field coil 15 is changed, the control magnetic poles 6 soon becomes the same pole to that of the magnets 5. Then, the effective flux acting on the armature coil 8 decreases as has been described, decreasing the torque of the armature coil 8. The motor can rotate at a high speed at the expense of the torque. That is, the motor can rotates at such a high speed as cannot be achieved in the low-speed, high-torque mode. In short, the operating characteristics of this motor can be controlled over a broad range, in accordance with the direction and amount of a small electric current induced in the field coil 15.

### (Third Embodiment)

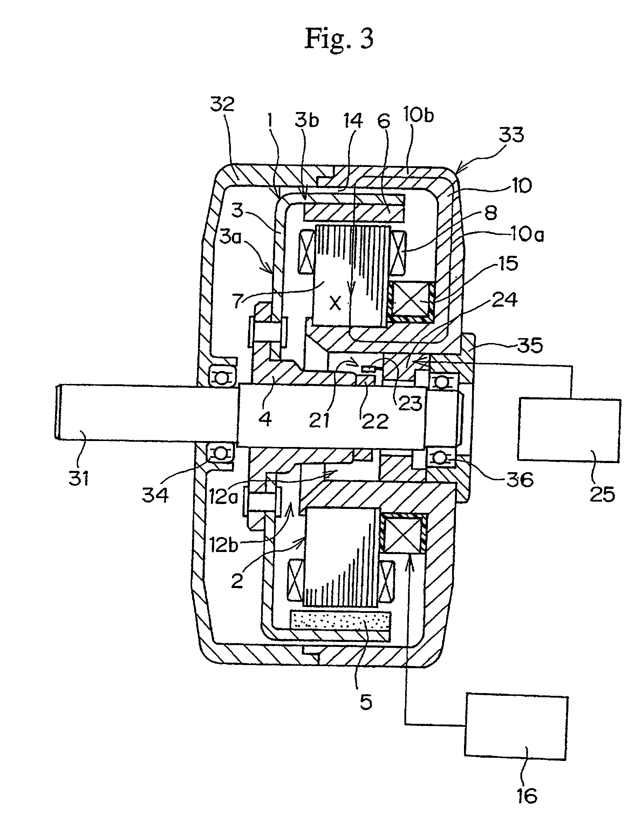

The third embodiment of the invention, which is a brush-less motor, will be described. This motor is characterized in that the second yoke 10 serves as a bracket as well. FIG. 3 is a cross sectional view of this brush-less motor, i.e., the third embodiment of the invention. The components of this motor, which are identical or similar to those of the second embodiment are designated at the same reference numerals and will not be described in detail.

In the motor according to the third embodiment, the second yoke 10 is the motor housing and serves as end bracket. In this motor, the rotor 1 is secured on the motor shaft 31 and accommodated in a front bracket 32 and an end bracket 33 that serves as the second yoke 10. Both brackets 32 and 33 are made of non-magnetic material such as aluminum. A bearing 34 made of non-magnetic material is attached to the front bracket 32. A bearing holder 35 made of non-magnetic material is secured to the end bracket 33. The holder 35 holds a bearing 35. The bearings 34 and 36 support the motor shaft 31.

As mentioned above, the second yoke 10 is used as the end bracket 33. Thus, the motor shown in FIG. 3 is an assembled unit, in contrast to the motor of FIG. 2 that is fastened to the end bracket 9 of an engine or the like. The rotor 1 and the front bracket 32 can be used as a rotor and front bracket of ordinary brush-less motors. It follows that the conventional manufacturing facility can be used, without being modified, to manufacture the motor. Furthermore, the rotor 1 can have as small a weight and an inertial mass as in conventional brush-less motors, though it has hybrid field-magnet structure. The motor can therefore be controlled in various manners as the conventional brush-less motors that are not of hybrid field-magnet structure.

Needless to say, the structure of the brush-less motor according to the third embodiment, in which the second yoke 10 serves as a bracket as well, can be applied to generators.

### (Fourth Embodiment)

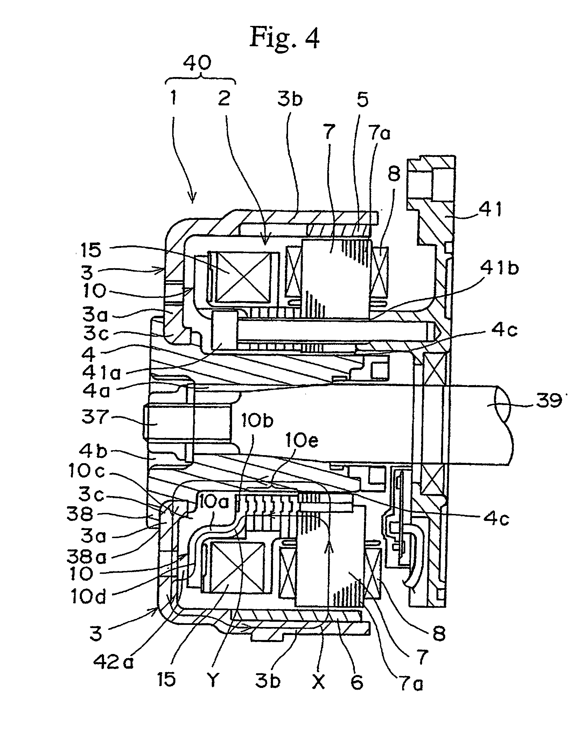

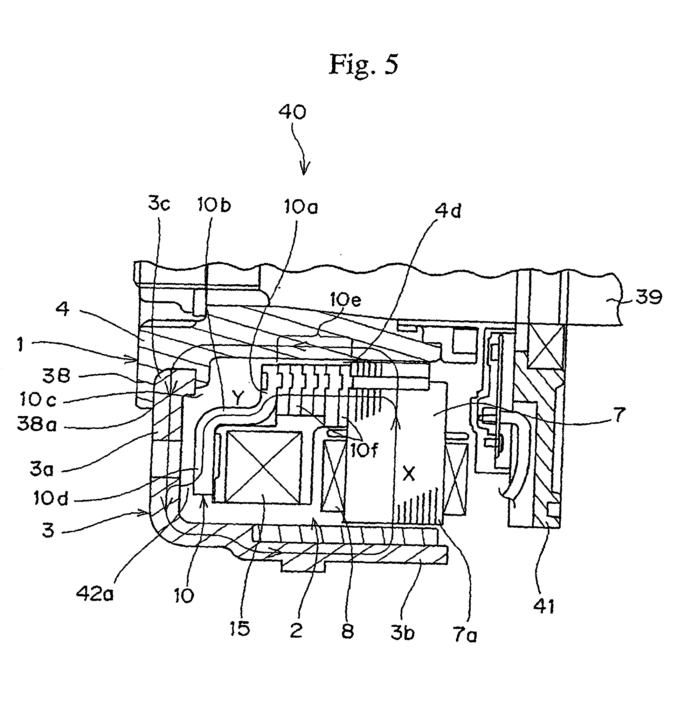

The fourth embodiment of this invention, which is a generator, will be described. FIG. 4 is a sectional view of this generator 40. FIG. 5 is a magnified view of the lower half of the generator 40 shown in FIG. 4. The components of the generator 40, which are identical or similar to those of the second embodiment are designated at the same reference numerals and will not be described in detail.

As shown in FIG. 4, the generator 40 comprises a rotor 1 and a stator 2. The rotor 1 and stator 2 function as a field-magnet unit and an armature, respectively. Like the conventional generator shown in FIG. 7, the generator 40 is of so-called hybrid field-magnet structure, comprising control magnetic poles 6 and a field coil 15.

The rotor 1 has a boss rotor 4 and a first yoke 3. The boss rotor 4 holds, for example, the crankshaft 39 of an engine. The first yoke 3 is secured to the outer circumferential surface of the boss rotor 4. The boss rotor 4 is a hollow cylinder made of magnetic material such as iron. The boss rotor 4 has a shaft-holding recess 4a and a nut-holding hole 4b in one end. One end portion of the crankshaft 39 is inserted into the recess 4a from the other end of the boss rotor 4. Once the crankshaft 39 is partly inserted in the recess 4a, it is prevented from rotating. A nut 37 is fastened on the crankshaft 39 in the nut-holding hole 4b. Thus, the rotor 1 is rotated when the crankshaft 39 rotates. The boss rotor 4 has a flange 38 at one end. The flange 38 has an annular connection groove 38a in its circumferential surface. The first yoke 3 is held in part in the annular connection groove 38a.

The first yoke 3 is a short, bottomed hollow cylinder made of magnetic material such as iron. The first yoke 3 and the boss rotor 4 are positioned concentrically to each other. The free edge 3c of the bottom 3a of the first yoke 3 is fitted in the connection groove 38a of the boss rotor 4. The first yoke 3 may be secured to the boss rotor 4 in any other means. Magnets (permanent magnets) 5 and control magnetic poles 6 are alternately arranged on the inner circumferential surface of the cylindrical part of the first yoke 3. The magnets 5 and the control magnetic poles 6 constitute the field-magnet unit of the rotor 1. In other words, this embodiment is of hybrid field-magnet structure, too, in which the field magneton has a control device.

The stator 2 comprises a stator core (core member) 7, an armature coil 8, and a second yoke 10. The armature coil 8 is wound around the stator core 7. The second yoke 10 is magnetically connected to the stator core 7. The stator core 7 is composed of a plurality of thin plates 7a stacked on upon another and made of magnetic material such as iron. The stator core 7 has a first boss hole 4c in the center part, which magnetically connects the core 7 to the boss rotor 4 via a gap. The stator core is fastened to a bracket 41, at three parts at least, by means of through nuts 41a and bolts 41b.

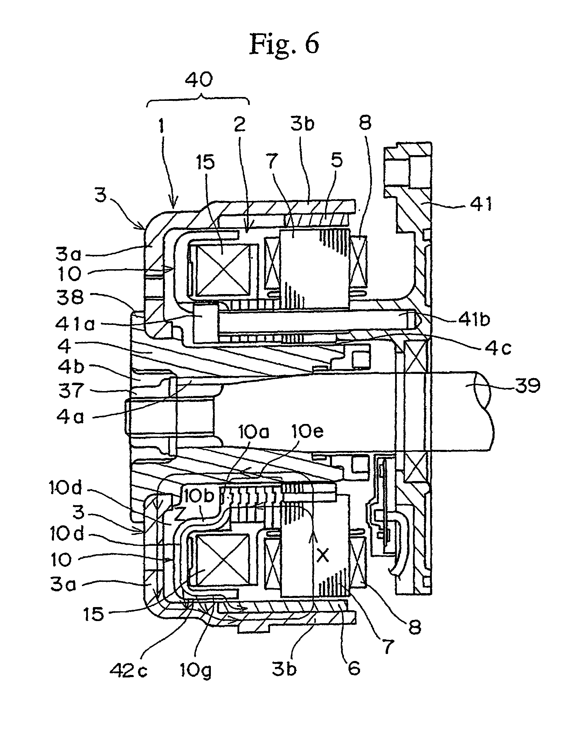

As shown in FIGS. 5 and 6, the second yoke 10 comprises a bottom section 10a, a cylindrical section 10b, and a disk section 10d. The bottom section 10a closes one end of the cylindrical section 10b. The bottom section 10a, cylindrical section 10b and disk section 10d have substantially the same wall thickness.

One side of the disk section 10d faces the inner surface of the bottom 3a of the first yoke 3 and extends almost parallel to the inner surface of the bottom 3a. A planer gap 42a is provided between this side of the disk section 10d and the inner surface of the bottom 3a. The gap 42a can be adjusted to any desired value. This specific positional relation between that side of the disk section 10d and the inner surface of the bottom 3a of the first yoke 3 enables magnetic flux to propagate from the disk section 10d of the second yoke 10 to the bottom 3a of the first yoke 3, almost uniformly at any position existing between disk section 10d and the bottom 3a.

A laminated section 10e is provided between the bottom section 10a and the stator core 7. The laminated section 10e is composed of a plurality of plates 10f stacked one upon another and magnetically connected one to another. The plates 10f are made of the same material as the bottom section 10a, that is, magnetic material such as iron. The plates 10f can be made of any desired material and provided in any desired thickness, and the laminated section 10e can be composed of any number of plates stacked one upon another. The bottom section 10a and the laminated section 10e have a second boss hole 4d in their central parts. The hole 4d holds the boss rotor 4. In the boss rotor 4, a gap 42b is provided between the bottom section 10a and laminated section 10e. Thus, the second yoke 10 and the boss rotor 4 do not contact while the rotor 1 is rotating. That is, the outer surface of the boss rotor 4, the bottom section 10a, and the laminated section 10e are not magnetically connected.

The laminated section 10e may be replaced by a bottom section (not shown) that has the same thickness as the section 10e. Since the second yoke 10 has the laminated section 10e magnetically connected and secured to the bottom section 10a, the height of the second yoke 10, measured from the status core 4, can be freely changed. More correctly, the second yoke can have a desired height, by stacking plates in an appropriate number. This enhances the freedom of designing the generator 40 can therefore be enhanced. In addition, this renders it easy to make the through holes by means of a press, which in turn makes it easy to assemble the generator 40.

The second yoke 10 is magnetically connected to the stator core 7 and secured thereto, by the through nut 41a that connects the stator core 7 to the bracket 41.

The field coil 15 is provided between the armature coil 8 and the disk section 10d of the second yoke 10. The field coil 15 is wound around a bobbin (not shown) that surrounds the bottom section 10a, cylindrical section 10b and laminated section 10e of the second yoke 10. As in the first embodiment, a control means (not shown) can control the amount and direction of electric current induced in the field coil 15.

When the electric current is induced in the field coil 15, a closed magnetic circuit X is formed so as to extend from the stator core 7 through the boss rotor 4, the free edge 3c of the first yoke 3, the disc section 3b of the first yoke 3, and the control magnetic poles 6 to the stator core 7. A sub-magnetic circuit Y is formed so as to extend from the stator core 7 through the laminated section 10e of the second yoke 10, the bottom section 10a of the second yoke 10, the cylindrical section 10b of the second yoke 10, and the disc section 10d of the second yoke 10 to the bottom section 3a of the first yoke 3.

In addition to the closed magnetic circuit X, the sub-magnetic circuit Y formed functions as a bypass. An effective magnetic flux as intensive as in conventional generators can be maintained even if the boss rotor 4 and the bottom section 3a of the first yoke 3, which constitute the closed magnetic circuit X corresponding to the sub-magnetic circuit Y, are made thinner than their counterparts of the conventional generators. This is because, if the magnetic flux generated in the closed magnetic circuit X decreases in intensity due to the reduction in thickness of the boss rotor 4 and the bottom section 3a, this decrease is compensated for by the magnetic flux generated in the sub-magnetic circuit Y. Therefore, the rotor 1 can have as small a weight and an inertial mass, while the effective magnetic flux is maintained, not decreased at all.

### (Sixth Embodiment)

The sixth embodiment of the present invention, which is generator, will be described. The sixth embodiment is a modification of the fourth embodiment, in that the second yoke is different from its counterpart of the fourth embodiment. FIG. 6 is a sectional view of the generator 40 according to the sixth embodiment. The components of the generator 40, which are identical or similar to those of the fourth embodiment are designated at the same reference numerals and will not be described in detail.

As shown in FIG. 6, the generator 40 has an extended section 10g protruding from the outer circumferential surface (free edge) of the disk section 10d of the second yoke 10. One surface of the extended section 10g is substantially parallel to the inner surface of the cylindrical section 3b of the first yoke 3. A gap 42c having a desired size is provided between that surface of the extended section 10g and the inner surface of the cylindrical section 3b. The length of the extended section 10g can be changed so long as it protrudes from the outer circumferential surface of the disk section 10d toward the stator core 7, not contacting the stator core 7.

The field coil 15 is surrounded by the laminated section 10e, bottom section 10a, cylindrical section 10b, disk section 10d and extended section 10g of the second yoke 10 and by the armature coil 8. Therefore, when electric current is induced in the field coil 15, a closed magnetic circuit X of the same type as in the fourth embodiment is formed. And, a sub-magnetic circuit Z is formed so as to extend from the stator core 7 through the laminated section 10e of the second yoke 10, the bottom section 10a of the second yoke 10, the cylindrical section 10b of the second yoke 10, the disk section 10d of the second yoke 10, and extended section 10g of the second yoke 10 to the cylindrical section 3b of the first yoke 3.

Thanks to the provision of the sub-magnetic circuit Z, the boss rotor 4 and the bottom section 3a of the first yoke 3, which constitute the closed magnetic circuit X corresponding to the sub-magnetic circuit Z, can be made thin. Thus, the rotor 1 can have as small a weight and an inertial mass as in the conventional machine, while the effective magnetic flux is maintained, not decreased at all.

The embodiments of the invention made by the inventors have been described in detail. Nonetheless, this invention is not limited to the embodiments described above. Various changes and modifications can of course be made, within the spirit and scope of the invention.

The embodiments described above are generators and brush-less motors. Nevertheless, the present invention can be applied to various rotary electric machines each having magnets on the rotor, such as a starting generator for use in two-wheeled vehicles, a portable generator, a fan motor of outer-rotor type and one for use in various work apparatus using a general-purpose engine, including a battery-less medicine applicator.

The rotary electric machine according to the invention has so-called hybrid field-magnet structure . The second yoke covers the first yoke that is a hollow cylinder. A field coil is provided between the stator core and the second yoke. A closed magnetic circuit X is thereby formed, which extends from the second yoke through the cylindrical section of the first yoke, the control magnetic poles, and the stator core to the second yoke. The second yoke can therefore serve to form a magnetic circuit by virtue of the field coil. The first yoke and the boss rotor need not serve to form the magnetic circuit of the field coil. This renders the first yoke thin and the boss rotor small. The rotor can therefore have a small weight and a small inertial mass. Hence, the hybrid field-magnet structure can be applied to rotary electric machines which cannot hitherto have this structure because they need to have small inertial mass as is desired. Further, the first yoke and the boss rotor can be composed of the components of a conventional generator that has no hybrid field-magnet structure. The conventional components and the conventional manufacturing facility can be used, without being modified, to manufacture the generator.

A gap is provided between the first yoke and the boss section of the second yoke, magnetically isolating the first yoke and the boss section from each other. The gap prevents the magnetic flux from leaking from the field coil to the boss rotor or yokes of the rotor. Further, since the second yoke serves as a bracket as well, the second yoke can constitute a part of the housing of the rotary electric machine, simplifying the structure of the rotary electric machine.

In another rotary electric machine according to the invention, the second yoke is located in the first yoke and opposes the bottom section of the first yoke and the outer surface of the boss rotor, and the field coil is provided between the second yoke and the armature coil. Thus, when a current flows in the field coil, a closed magnetic circuit and a sub-magnetic circuit are formed. Even if the boss rotor and the bottom section of the first yoke, both serving to form the closed magnetic circuit, are made thin, the magnetic flux generated in the sub-magnetic circuit can compensate for the decrease in the magnetic flux generated in the closed magnetic circuit. The rotor 1 can therefore have as small a weight and an inertial mass as in the conventional machine, while the effective magnetic flux is maintained, not decreased at all.

Further, a planer gap may be provided between the bottom of the first yoke and the second yoke facing the bottom of the first yoke. By virtue of the planer gap, the magnetic flux can be uniform at any place, while being transmitted from the sub-magnetic circuit to the bottom section of the closed magnetic circuit.

Moreover, the second yoke may have an extended section formed integral with a free end and opposing the inner surface of the first yoke that is a hollow cylinder. The sub-magnetic circuit can therefore be lengthened, and that part of the first yoke that overlaps the extended section of the second yoke can have a small wall thickness. In other words, the boss rotor of the rotor, the bottom section of the first yoke, and a part or whole of the first yoke can be thin. This helps to reduce further the weight and inertial mass of the rotor.

Still further, the second yoke may have a laminated section that is located near the core member. This renders it easy to make the through holes by means of a press, which in turn makes it easy to assemble the generator.

## Claims

1. A rotary electric machine comprising:
a stator (2) having an armature coil (8) and a core member (7) around which the armature coil (8) is wound;
a rotor (1) having a first yoke (3) made of magnetic material, a plurality of permanent magnets (5) magnetized in the same polarity, and a plurality of control magnetic poles (6) made of magnetic material, the first yoke (3) being formed like a bottomed hollow cylinder and rotatably provided outside the stator, the permanent magnets (5) being spaced on an inner surface of a cylindrical section (3b) of the first yoke (3) in a circumferential direction of the first yoke, the control magnetic poles (6) being arranged between the permanent magnets (5);
a second yoke (10) made of magnetic material, magnetically connected to the core member (7) so as to be positioned concentrically to the rotor in an opposite side of the first yoke (3), and provided so as to cover an outer circumferential surface of the cylindrical section (3b) of the first yoke (3) from an opposite side of the first yoke through a gap (14); and
a field coil (15) provided between the core member (7) and the second yoke (10), thereby forming a closed magnetic circuit that extends from the second yoke (10) through the cylindrical section (3b) of the first yoke (3), control magnetic poles (6), and the core member (7) to the second yoke (10).

2. The rotary electric machine according to claim 1,
wherein the second yoke (10) has a boss section (11) connected to an inner circumferential surface or a center part of the core member (7), and the field coil (15) is wound so as to surround the boss section (11).

3. The rotary electric machine according to claim 1, further comprising a field coil control means (16) for controlling at least one of a flow direction and amount of an electric current supplied to the field coil (15), thereby changing a magnetic flux generated by the field coil (15).

4. The rotary electric machine according to claim 3, wherein a gap (14) is provided between the first yoke (3) and the boss section (11) of the second yoke (10) to magnetically insulate the first yoke (3) and the boss section (11) from each other.

5. The rotary electric machine according to claim 1, wherein the second yoke (10) serves both as a yoke and as a bracket of the rotary electric machine.

6. The rotary electric machine according to claim 3,
wherein the rotary electric machine includes a brush-less motor,
the rotary electric machine further comprises a rotor-position detecting means (21) for detecting a position of the rotor (1) and a current-supply control means for supplying a current to the armature coil (8) in accordance with a result detected by the rotor-position detecting means (21), thereby generating a magnetic field between the armature coil (8) and the rotor (1), and
the field coil control means (16) changes the magnetic flux generated by the field coil (15), thereby controlling effective magnetic flux amount provided between the rotor (1) and the stator (2) and changes characteristics of the motor.

7. The rotary electric machine according to claim 3, the rotary electric machine includes a generator, and
the field coil control means (16) changes the magnetic flux generated by the field coil (15), thereby controlling an effective magnetic flux provided between the rotor (1) and the stator (2) and changes characteristics of the generator.

8. A rotary electric machine comprising:
a stator (2) having an armature coil (8) and a core member (7) around which the armature coil is wound;
a rotor (1) having a boss rotor (4) magnetically connected to a center part of the core member (7), a first yoke (3) made of magnetic material, a plurality of permanent magnets (5) magnetized in the same polarity, and a plurality of control magnetic poles (6) made of magnetic material, the boss rotor (4) being formed like a bottomed hollow cylinder and rotatably provided outside the stator, the permanent magnets (5) magnetized being spaced on an inner surface of a circumferential section of the first yoke (3) in a circumferential direction of the first yoke (3), the control magnetic poles (6) being arranged between the permanent magnets (5);
a second yoke (10) made of magnetic material, magnetically connected to the core member (7) so as to be positioned concentrically to the rotor (1) and to face on both a bottom of the first yoke (3) and an outer surface of the boss rotor (4); and
a field coil (15) provided between the second yoke (10) and the armature coil (8), the field coil (15) having a closed magnetic circuit extending from the core member (7) through the boss rotor (4) and the first yoke (3) to the core member (7), and a sub-magnetic circuit extending from the core member (7) though the second yoke (10) to the first yoke (3).

9. The rotary electric machine according to claim 8,
wherein a plane gap is provided between a bottom (3a) of the first yoke (3) and the second yoke (20) facing on the bottom (3a) of the first yoke (3).

10. The rotary electric machine according to claim 8,
wherein the second yoke (10) includes an extended section formed integrally with a free end of the second yoke (10) and facing on an inner surface of the circumferential section of the first yoke (3).

11. The rotary electric machine according to claim 8,
wherein the second yoke (10) includes a laminated section located in a side of the core member (7).

## Patentansprüche

1. Rotierende elektrische Maschine aufweisend:
einen Stator (2) mit einer Ankerspule (8) und einem Kernelement (7), um das die Ankerspule (8) gewickelt ist;
einem Rotor (1) mit einem ersten Joch (3) aus magnetischem Material, einer Vielzahl von in derselben Polarität magnetisierten Permanentmagneten (5) und einer Vielzahl von Steuerungsmagnetpolen (6) aus magnetischem Material, wobei das erste Joch (3) wie ein Hohlzylinder mit Boden geformt und drehbar außerhalb des Stators vorgesehen Ist, wobei die Permanentmagneten (5) auf einer inneren Oberfläche eines zylindrischen Abschnitts (3b) des ersten Jochs (3) in Umfangsrichtung des ersten Jochs beabstandet sind und wobei die Steuerungsmagnetpole (6) zwischen den Permanentmagneten (5) angeordnet sind;
einem zweiten Joch (10) aus magnetischem Material, das magnetisch derart mit dem Kemelement (7) verbunden ist, dass es konzentrisch zu dem Rotor auf einer gegenüberliegenden Seite des ersten Jochs (3) positioniert ist, und derart vorgesehen ist, dass es eine äußere Umfläche des zylindrischen Abschnitts (3b) des ersten Jochs (3) von einer dem ersten Joch gegenüberliegenden Seite über einen Spalt (14) abdeckt; und
einer zwischen dem Kemelement (7) und dem zweiten Joch (10) vorgesehenen Feldspule (15), die dadurch einen geschlossenen Magnetkreis ausbildet, der sich von dem zweiten Joch (10) durch den zylindrischen Abschnitt (3b) des ersten Jochs (3), Steuerungsmagnetpole (6) und das Kemelement (7) zu dem zweiten Joch (10) erstreckt.

2. Rotierende elektrische Maschine nach Anspruch 1, wobei das zweite Joch (10) einen Nabenabschnitt (11) aufweist, der an eine innere Umfläche oder einen Mittelteil des Kemelements (7) angeschlossen ist, und wobei die Feldspule (15) derart gewickelt ist, dass sie den Nabenabschnitt (11) umgibt.

3. Rotierende elektrische Maschine nach Anspruch 1, femer aufweisend ein Feldspulen-Steuerungsmittel (16) zum Steuern wenigstens entweder der Flussrichtung oder der Menge eines der Feldspule (15) zugeführten elektrischen Stroms, wodurch der durch die Feldspule (15) erzeugte magnetische Fluss verändert wird.

4. Rotierende elektrische Maschine nach Anspruch 3, wobei ein Spalt (14) zwischen dem ersten Joch (3) und dem Nabenabschnitt (11) des zweiten Jochs (10) vorgesehen ist, um das erste Joch (3) und den Nabenschnitt (11) magnetisch voneinander zu isolieren.

5. Rotierende elektrische Maschine nach Anspruch 1, wobei das zweite Joch (10) sowohl als ein Joch als auch als ein Träger der rotierenden elektrischen Maschine dient.

6. Rotierende elektrische Maschine nach Anspruch 3, wobei die rotierende elektrische Maschine einen bürstenlosen Motor umfasst,
wobei die elektrische Maschine ferner ein Rotorposition-Detektormittel (21) zum Detektieren einer Position des Rotors (1) und ein Stromversorgungs-Steuerungsmittel zum Zuführen eines Stroms zu der Ankerspule (8) in Übereinstimmung mit einem von dem Rotorposition-Detektormittel (21) detektierten Ergebnis aufweist, um dadurch ein magnetisches Feld zwischen der Ankerspule (8) und dem Rotor (1) zu erzeugen, und
· wobei das Feldspulen-Steuerungsmittel (16) den durch die Feldspule (15) erzeugten magnetischen Fluss ändert, um dadurch die zwischen dem Rotor (1) und dem Stator (2) vorgesehene effektive Magnetflussmenge zu steuern, und die Charakteristik des Motors ändert.

7. Rotierende elektrische Maschine nach Anspruch 3, wobei die rotierende elektrische Maschine einen Generator umfasst, und
wobei das Feldspulen-Steuerungsmittel (16) den durch die Feldspule (15) erzeugten magnetischen Fluss ändert, um dadurch einen zwischen dem Rotor (1) und dem Stator (2) vorgesehenen effektiven Magnetfluss zu steuern, und die Charakteristik des Generators ändert.

8. Rotierende elektrische Maschine aufweisend:
einen Stator (2) mit einer Ankerspule (8) und einem Kernelement (7), um das die Ankerspule gewickelt ist;
einem Rotor (1) mit einem magnetisch an einen Mittelteil des Kernelements (7) angeschlossenen Nabenrotor (4), einem ersten Joch (3) aus magnetischem Material, einer Vielzahl von in derselben Polarität magnetisierten Permanentmagneten (5) und einer Vielzahl von Steuerungsmagnetpolen (6) aus magnetischem Material, wobei der Nabenrotor (4) wie ein Hohlzylinder mit Boden geformt und drehbar außerhalb des Stators vorgesehen ist, wobei die magnetisierten Permanentmagneten (5) auf einer Inneren Oberfläche eines Umfangsabschnitts des ersten Jochs (3) in Umfangsrichtung des ersten Jochs (3) beabstandet sind und wobei die Steuerungsmagnetpole (6) zwischen den Permanentmagneten (5) angeordnet sind;
einem zweiten Joch (10) aus magnetischem Material, das magnetisch derart mit dem Kemelement (7) verbunden ist, dass es konzentrisch zu dem Rotor (1) positioniert ist und sowohl einem Boden des ersten Jochs (3) und einer äußeren Oberfläche des Nabenrotors (4) gegenüberliegt; und
einer zwischen dem zweiten Joch (10) und der Ankerspule (8) vorgesehenen Feldspule (15), wobei die Feldspule (15) einen geschlossenen Magnetkreis hat, der sich von dem Kernelement (7) durch den Nabenrotor (4) und das erste Joch (3) zu dem Kemelement (7) erstreckt, und einen Untermagnetkreis, der sich von dem Kemelement (7) durch das zweite Joch (10) zu dem ersten Joch (3) erstreckt.

9. Rotierende elektrische Maschine nach Anspruch 8, wobei ein planer Spalt zwischen einen Boden (3a) des ersten Jochs (3) und dem zweiten Joch (10) vorgesehen ist, das dem Boden (3a) des ersten Jochs gegenüberliegt.

10. Rotierende elektrische Maschine nach Anspruch 8, wobei das zweite Joch (10) einen ausgedehnten Abschnitt umfasst, der mit einem freien Ende des zweien Jochs (10) Integral geformt ist und einer inneren Oberfläche des Umfangsabschnitts des ersten Jochs (3) gegenüberliegt.

11. Rotierende elektrische Maschine nach Anspruch 8, wobei das zweite Joch (10) einen laminierten Abschnitt umfasst, der auf einer Seite des Kemelements (7) angeordnet ist.

## Revendications

1. Machine électrique tournante comprenant :
un stator (2) qui comporte un bobinage d'induit (8) et un noyau (7) autour duquel le bobinage d'induit (8) est enroulé ;
un rotor (1) qui comporte une première culasse (3) constituée de matériau magnétique, plusieurs aimants permanents (5) magnétisés suivant la même polarité et plusieurs pôles magnétiques de commande (6) constitués de matériau magnétique, la première culasse (3) étant façonnée sous forme d'un cylindre creux à fond fermé et mise en place, suivant un montage en rotation, à l'extérieur du stator, les aimants permanents (5) étant placés à intervalles mutuels sur la surface intérieure d'une partie cylindrique (3b) de la première culasse (3), dans la direction circonférentielle de la première culasse, les pôles magnétiques de commande (6) étant disposés entre les aimants permanents (5) ;
une seconde culasse (10) constituée de matériau magnétique, reliée magnétiquement au noyau (7) de façon à être dans une position concentrique au rotor, en vis-à-vis de la première culasse (3), et mise en place de façon à chevaucher la surface périphérique extérieure de la partie cylindrique (3b) de la première culasse (3), en ménageant un entrefer (14) avec celle-ci, depuis une face placée en vis-à-vis de la première culasse ; et
une bobine d'excitation (15) mise en place entre le noyau (7) et la seconde culasse (10), en formant ainsi un circuit magnétique fermé qui, en partant de la seconde culasse (10), passe par la partie cylindrique (3b) de la première culasse (3), les pôles magnétiques de commande (6) et le noyau (7), pour revenir à la seconde culasse (10).

2. Machine électrique tournante selon la revendication 1, dans laquelle la seconde culasse (10) comporte une partie en moyeu (11) reliée à la surface périphérique intérieure ou à une partie centrale du noyau (7), et la bobine d'excitation (15) est enroulée de façon à entourer la partie en moyeu (11).

3. Machine électrique tournante selon la revendication 1, comprenant, en outre, des moyens de commande de bobine d'excitation (16) destinés à agir sur le sens de circulation et/ou l'amplitude d'un courant électrique fourni à la bobine d'excitation (15), en modifiant ainsi le flux magnétique engendré par la bobine d'excitation (15).

4. Machine électrique tournante selon la revendication 3, dans laquelle un interstice (14) est ménagé entre la première culasse (3) et la partie en moyeu (11) de la seconde culasse (10), afin d'isoler magnétiquement l'une de l'autre la première culasse (3) et la partie en moyeu (11).

5. Machine électrique tournante selon la revendication 1, dans laquelle la seconde culasse (10) fait office à la fois de culasse et de support de la machine électrique tournante.

6. Machine électrique tournante selon la revendication 3, dans laquelle la machine électrique tournante comprend un moteur sans balais,
la machine électrique tournante comporte, en outre, des moyens de détection de position de rotor (21), destinés à détecter une position du rotor (1), et des moyens de commande de fourniture de courant, destinés à fournir un courant au bobinage d'induit (8) en fonction du résultat de la détection faite par les moyens de détection de position de rotor (21), en engendrant ainsi un champ magnétique entre le bobinage d'induit (8) et le rotor (1), et
les moyens de commande de bobine d'excitation (16) modifient le flux magnétique engendré par la bobine d'excitation (15), en régulant l'amplitude du flux magnétique efficace, établie entre le rotor (1) et le stator (2), et modifient les caractéristiques du moteur.

7. Machine électrique tournante selon la revendication 5, cette machine électrique tournante comprenant une génératrice, dans laquelle
les moyens de commande de bobine d'excitation (16) modifient le flux magnétique engendré par la bobine d'excitation (15), en agissant ainsi sur le flux magnétique efficace développé entre le rotor (1) et le stator (2), et modifient les caractéristiques de la génératrice.

8. Machine électrique tournante comprenant :
un stator (2) qui comporte un bobinage d'induit (8) et un noyau (7) autour duquel le bobinage d'induit est enroulé ;
un rotor (1) comportant un rotor à moyeu (4) relié magnétiquement à une partie centrale du noyau (7), une première culasse (3)
constituée de matériau magnétique, plusieurs aimants permanents (5) magnétisés suivant la même polarité et plusieurs pôles magnétiques de commande (6) constitués de matériau magnétique, le rotor à moyeu (4) étant façonné sous forme d'un cylindre creux à fond fermé et mis en place, suivant un montage en rotation, à l'extérieur du stator, les aimants permanents magnétisés (5) étant placés à intervalles mutuels sur la surface intérieure d'une partie cylindrique de la première culasse (3), dans la direction circonférentielle de la première culasse (3), les pôles magnétiques de commande (6) étant disposés entre les aimants permanents (5) ;
une seconde culasse (10) constituée de matériau magnétique, reliée magnétiquement au noyau (7) de façon à être dans une position concentrique au rotor (1) et à faire face, à la fois, à un fond de la première culasse (3) et à la surface extérieure du rotor à moyeu (4) ; et
une bobine d'excitation (15) mise en place entre la seconde culasse (10) et le bobinage d'induit (8), la bobine d'excitation (15) comportant un circuit magnétique fermé passant, en partant du noyau (7), à travers le rotor à moyeu (4) et la première culasse (3), pour revenir au noyau (7), ainsi qu'un circuit magnétique secondaire s'étendant du noyau (7) à la première culasse (3), en passant par la seconde culasse (10).

9. Machine électrique tournante selon la revendication 8, dans laquelle un entrefer plan est ménagé entre un fond (3a) de la première culasse (3) et la seconde culasse (10), faisant face au fond (3a) de la première culasse (3).

10. Machine électrique tournante selon la revendication 8, dans laquelle la seconde culasse (10) présente un prolongement formé d'un seul tenant avec une extrémité libre de la seconde culasse (10) et situé face à la surface intérieure de la partie périphérique de la première culasse (3).

11. Machine électrique tournante selon la revendication 8, dans laquelle la seconde culasse (10) présente une partie stratifiée disposée sur un côté du noyau (7).
